(19) Europäisches Patentamt
European Patent Office
Office européen des brevets

(11) Numéro de publication: **0 265 353**
**B1**

(12) # FASCICULE DE BREVET EUROPEEN

(45) Date de publication du fascicule du brevet: **05.12.90**

(51) Int. Cl.[5]: **C08F 222/40**

(21) Numéro de dépôt: **87420280.7**

(22) Date de dépôt: **19.10.87**

(54) **Polymères à groupements imides sans diamine et leurs procédés de préparation.**

(30) Priorité: **24.10.86 FR 8615020**

(43) Date de publication de la demande:
**27.04.88 Bulletin 88/17**

(45) Mention de la délivrance du brevet:
**05.12.90 Bulletin 90/49**

(84) Etats contractants désignés:
**AT BE CH DE ES FR GB IT LI LU NL SE**

(56) Documents cités:
**EP-A- 0 032 644**
**FR-A- 2 427 346**
**GB-A- 2 021 597**

(73) Titulaire: **RHONE-POULENC CHIMIE, 25, quai Paul Doumer, F-92408 Courbevoie Cédex(FR)**

(72) Inventeur: **Arpin, René, 29, rue du Commandant-Faurax, F-69006 Lyon(FR)**

(74) Mandataire: **Trolliet, Maurice et al, RHONE-POULENC INTERSERVICES Service Brevets Chimie Centre de Recherches des Carrières B.P. 62, F-69192 Saint-Fons Cédex(FR)**

**EP 0 265 353 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objets de nouveaux polymères thermostables dont l'obtention met en jeu des bis-imides. Elle concerne également des procédés de préparation de ces polymères.

On a déja décrit des polymères obtenus par réaction entre un N,N'-bis-imide d'acide dicarboxylique insaturé tel que par exemple un N,N'-bis-maléimide avec une diamine biprimaire [brevet français n ° 1 555 564]. Les quantités de N,N'-bis-imide et de diamine sont choisies de façon que le rapport :

$$\frac{\text{nombre de moles de bis-imide}}{\text{nombre de moles de diamine}}$$

soit au moins égal à 1 ; par ailleurs on préfère généralement qu'il soit inférieur à 50. On obtient des résines thermostables qui résistent remarquablement aux contraintes thermiques sévères.

Il est également indiqué dans le brevet français précité que la préparation de ces résines peut être effectuée en masse en chauffant les réactifs préalablement soumis à un mélange intime ou bien au sein d'un diluant polaire inerte tel que le diméthylformamide, la N-méthylpyrrolidone, le diméthylacétamide, ce dernier processus pouvant être utilisé par exemple lorsque la mise en oeuvre du polymère nécessite l'emploi d'une solution.

Finalement, il est mentionné que pour de nombreux emplois, il est avantageux d'opérer en deux temps ; dans un premier stade, on prépare un prépolymère par chauffage du mélange intime des deux réactifs à une température de l'ordre de 100 à 250°C. Le prépolymère obtenu peut être utilisé à l'état de solution, de suspension, de poudre ou bien être conformé encore par simple coulée à chaud. Dans un second stade, on peut provoquer le durcissement du prépolymère par chauffage jusqu'à des températures de l'ordre de 300°C, éventuellement sous pression.

Ces polymères peuvent être convertis en films ou en matériaux multicellulaires. Ils sont d'un intérêt tout particulier pour la préparation d'objets moulés éventuellement en association avec des charges fibreuses ou pulvérulentes ou de stratifiés à base de fibres minérales (fibres simples, tissu ou non-tissé de fibres) telles que par exemples des fibres de carbone, de bore ou de verre. Cependant la préparation et la mise en oeuvre de ces polymères nécessitent de prendre des précautions sur le plan de l'hygiène lorsque la diamine biprimaire utilisée est de nature aromatique du fait de la toxicité que peuvent présenter certaines d'entre elles.

Pour pallier à cet inconvénient, la demanderesse à mis au point de nouveaux polymères à groupements imides qui ne font pas appel, pour leur préparation, à des diamines.

Le document FR-A 2 427 346 divulgue des polymères à groupements imide préparés par réaction d'un bis-maléimide, le N-vinylpyrrolidone-2 et un monomère éthylénique insaturé.

L'exemple 5 du document EP-A 32 644 décrit la réaction d'un bis-maléimide et de l'ester diméthacrylique du bisphénol A éthoxylé.

Plus précisément la présente invention concerne des polymères à groupements imides caractérisés en ce qu'ils comprennent le produit de réaction, à une température allant de 50° C à 300° C, entre :

- (a) un N,N'-bis-imide ou une association de plusieurs bis-imides de formule :

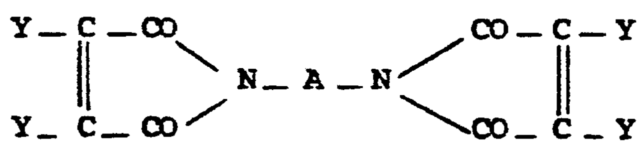 (I)

dans laquelle :

. les symboles Y, identiques ou différents, représentent chacun H, $CH_3$ ou Cl ;

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

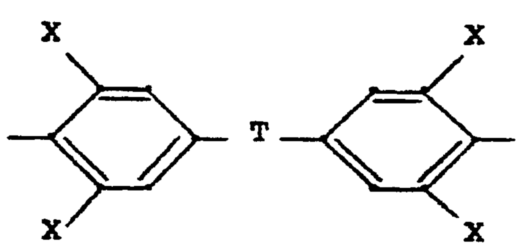

dans laquelle T représente un lien valentiel simple ou un groupement :

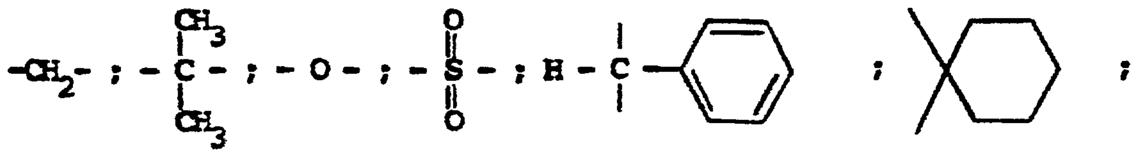

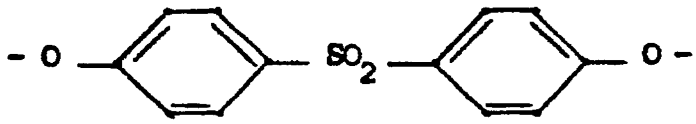

et les symboles X, identiques ou différents, représentent chacun un atome d'hydrogène, un radical méthyle, éthyle ou isopropyle ;
- et (b) un ou plusieurs diacrylates à structure aromatique de formule :

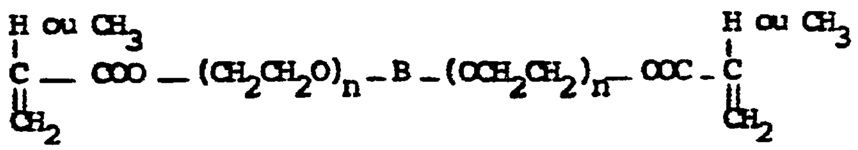

(II)

dans laquelle :
. le symbole B représente un radical divalent de formule :

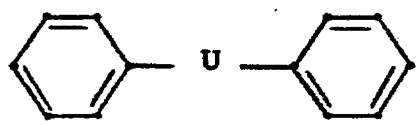

dans laquelle le symbole U représente un lien valentiel simple ou un groupement :

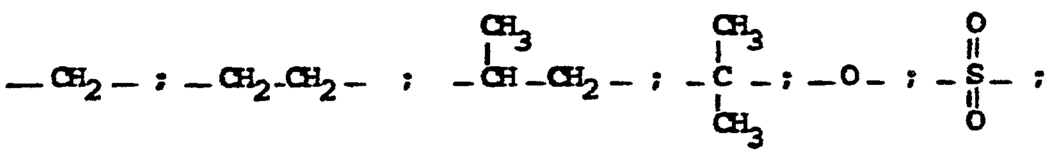

. les symboles n, identiques ou différents, représentent chacun un nombre égal à zéro, 1, 2, 3, 4 ou 5 ;
en présence de :
-(c) un composé imidazole.

A titre d'exemples spécifiques de bis-imides de formule (I), on peut citer en particulier :
- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide,

Ces bis-maléimides peuvent être préparés selon les procédés décrits dans le brevet américain n ° 3 018 290 et le brevent anglais n ° 1 137 290. On utilise de préférence, pour la mise en oeuvre de la présente invention, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide et/ou le N,N'-méthyl-5 phénylène-1,3-bis-maléimide.

A titre d'exemples spécifiques de diacrylates de formule (II), on peut citer en particulier les diacrylates et les diméthacrylates des diphénols, di(mono- ou poly-oxyéthylés) ou non, suivants :
-le dihydroxy-4,4'-diphénylméthane,
-le bisphénol A,
-le dihydroxy-4,4'-diphényléther.

On utilise de préférence, pour la mise en oeuvre de la présente invention, les diacrylates et les diméthacrylates des bisphénols A di(mono- ou poly-oxyéthylés). Les composés (b) qui conviennent tout particulièrement bien sont le diacrylate (ou le diméthacrylate) de bisphénol A di(mono-oxyéthylé) et le diacrylate (ou le diméthacrylate) de bisphénol A di(di-oxyéthylé) [cf. formule (II) dans laquelle le symbole B représente le radical :

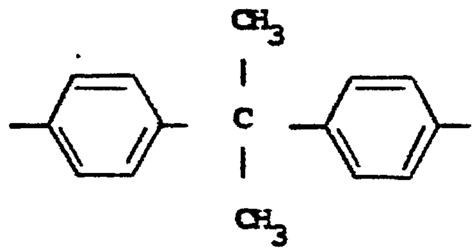

est n est égal à 1 et 2].

Les quantités de N,N'-bis-imide(s) (a) et de diacrylate(s) (b) sont choisies de façon à ce que le rapport r :

$$\frac{\text{nombre de moles de bis-imide(s) (a)}}{\text{nombre de moles de diacrylate(s) (b)}}$$

se situe de préférence dans l'intervalle allant de 1,7/1 à 20/1 et, de préférence, allant de 2/1 à 8/1.

Le composé imidazole (c) répond à la formule générale :

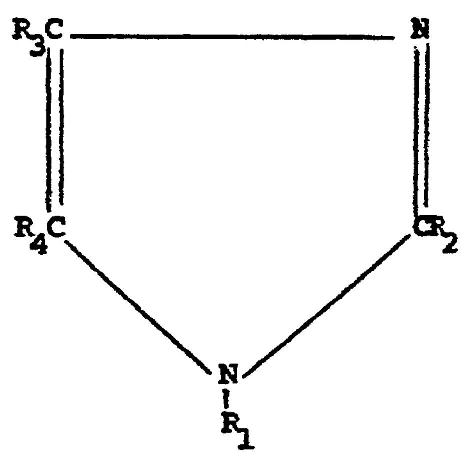

(III)

dans laquelle $R_1$, $R_2$, $R_3$ et $R_4$, identiques ou différents, représentent chacun : un atome d'hydrogène, un radical alkyle ou alcoxy ayant de 1 à 20 atomes de carbone, vinyle, phényle, nitro, $R_3$ pouvant former avec $R_4$ et les atomes de carbone auxquels sont liés ces radicaux un cycle unique comme par exemple un cycle benzénique.

Comme exemples spécifiques de composés imidazole, on peut citer en particulier : l'imidazole ou glyoxaline, le méthyl-1 imidazole, le méthyle-2 imidazole, le diméthyl-1,2 imidazole, le vinyl-1 imidazole, le vinyl-1 méthyl-2 imidazole, le benzimidazole.

Le composé imidazole est utilisé en quantités catalytiques. Selon la nature du composé imidazole et selon la vitesse de polymérisation souhaitée au stade de la mise en oeuvre, on utilise le composé imidazole à un taux, exprimé en nombre de moles de composé (c) pour 100 g du mélange bis-imide(s) (a) + diacrylate(s) (b), se situant dans l'intervalle allant de $0,15.10^{-3}$ à $6.10^{-3}$ et, de préférence, allant de $0,4.10^{-3}$ à $4.10^{-3}$.

Les polymères selon l'invention peuvent être préparés en masse par chauffage direct du ou des bis-imide(s) (a), du réactif acrylate (b) et du composé imidazole (c) au moins jusqu'à l'obtention d'un mélange liquide homogène. La température peut varier en fonction de l'état physique des composés en présence mais elle se situe généralement entre 50°C et 300°C. Il est avantageux d'amener et de maintenir les composés de départ dans un état de mélange intime avant et pendant le chauffage à l'aide par exemple d'une bonne agitation. De préférence, le composé imidazole (c) est ajouté au départ dans le mélange bien agité des réactifs (a) et (b) de façon à permettre sa dispersion rapide. Lorsque ce composé est particulièrement actif, pour éviter son encapsulation dans le réseau polymère engendré, il est souhaitable de l'ajouter dans un solvant ou diluant compatible avec le milieu réactionnel ; on a trouvé qu'il pouvait être intéressant d'utiliser comme solvant ou diluant un des liquides organiques polaires dont on parle ci-après.

La préparation des polymères selon l'invention peut aussi être effectuée par chauffage du mélange des réactifs au sein d'un diluant organique qui est liquide dans une partie au moins de l'intervalle 50°C - 300°C. Parmi ces diluants, on peut mentionner en particulier des hydrocarbures aromatiques comme les xylènes et le toluène, des hydrocarbures halogénés comme les chlorobenzènes, des solvants polaires comme le dioxanne, le tétrahydrofuranne et l'oxyde de dibutyle, le diméthylformamide, le diméthylsulfoxyde, la N-méthylpyrrolidone, le diméthylacétamide, le méthylglycol et la méthyl-éthyl-cétone. Les solutions ou suspensions de polymères peuvent être utilisées telles quelles pour de nombreux emplois ; on peut également isoler les polymères, par exemple par filtration, éventuellement après précipitation au moyen d'un diluant organique miscible avec le solvant utilisé. Dans ce contexte, on peut utiliser avantageusement un hydrocarbure dont le point d'ébullition ne dépasse pas notablement 120°C.

Il doit être compris que les propriétés des polymères selon l'invention peuvent varier dans une large mesure en fonction notamment de la nature exacte des réactifs engagés, des proportions de réactifs choisies et des conditions précises de température adoptées dans l'intervalle précédemment mentionné. En ce qui concerne les polymères obtenus, ceux-ci peuvent être des polymères durcis, insolubles dans les solvants usuels tels que par exemple les liquides cités dans le paragraphe précédent et ne présentant pas de ramollissement notable au dessous de la température à laquelle ils commencent à se dégrader.

Mais ces polymères peuvent également se présenter sous l'aspect de prépolymères (P) solubles dans les solvants organiques polaires et présentant un point de ramollissement à une température inférieure à 200°C [en général ce point de ramollissement est compris entre 50° et 150°C]. Ces prépolymères peuvent être obtenus en masse en chauffant le mélange des réactifs jusqu'à l'obtention d'un produit homogène ou pâteux à une température généralement située entre 50° et 180°C pendant une durée qui peut aller de quelques minutes à quelques heures, cette durée étant d'autant plus brève que la température adoptée est plus élevée. Avant de soumettre le mélange des réactifs au chauffage, il est avantageux là aussi d'en effectuer par agitation un mélange, intime préalable. Il éxiste là aussi une méthode préférée de mise en oeuvre du composé imidazole (c) et il s'agit de celle indiquée ci-avant à propos de la préparation directe de polymères durcis. La préparation des prépolymères peut également être effectuée en suspension ou en solution dans un diluant qui est liquide dans une partie au moins de l'intervalle 50° - 180°C.

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de charges à l'état de poudres, de sphères, de granules, de fibres ou de paillettes. Sous la forme de suspensions ou de solutions, les prépolymères (P) peuvent être utilisés pour la réalisation d'articles intermédiaires préimprégnés dont l'armature peut être constituée par des matières fibreuses (sous forme de fibres simples, de nappes tissées ou non tissées) à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures de l'ordre de 300°C, généralement comprises entre 150° et 300°C ; une mise en forme complémentaire peut être effectuée pendant le durcissement, éventuellement sous vide ou sous une pression super-atmosphérique, ces opérations pouvant également être consécutives.

Conformément à un mode de réalisation préféré de la présente invention, on opère en deux stades, le premier stade consistant à chauffer le mélange des réactifs entre 50° C et 180° C pour former un prépolymère (P), le second stade consistant à durcir le prépolymère (P), après lui avoir donné la forme désirée, par chauffage jusqu'à des températures de l'ordre de 300° C.

Cependant, conformément à un mode de réalisation plus préférentiel encore de la présente invention, on opère en deux stades, mais en utilisant dans le premier stade un procédé de préparation en continu du prépolymère (P) consistant à introduire isolément le ou les bis-imide(s) (a) à l'état solide divisé, le ou les diacrylate(s) (b) à l'état liquide ou fondu et le composé imidazole (c) à l'état solide ou en solution dans un malaxeur à vis extrudeuse.

Par l'expression "malaxeur à vis extrudeuse", on entend désigner un appareil qui ne présente pas de zone morte lors de la progression de la matière. Des appareils de ce genre qui peuvent comporter une ou plusieurs vis sont décrits dans l'ouvrage de E.G. FISHER-Extrusion of Plastics (Interscience Publisher 1964) page 104 à 108. Ces malaxeurs peuvent comporter deux vis sans fin s'engrenant intimement l'une dans l'autre et tournant dans le même sens ; un appareil de ce type équipé plus particulièrement pour la préparation de téréphtalates alcalins est décrit dans le brevet français 1 462 935. Une autre variété de malaxeurs utilisables est constituée par les appareils comportant une vis sans fin à filotage interrompu

effectuant simultanément un mouvement de rotation et un mouvement oscillatoire dans la direction de l'axe, logée dans une enveloppe comportant des dents qui coopèrent avec les ailettes interrompues de la vis. Des appareils de ce type sont décrits dans les brevets français 1 184 392, 1 184 393, 1 307 106 et 1 369 283.

Pour des raisons de commodité de mise en oeuvre, on préfère employer le ou les bis-imide(s) (a) sous la forme de particules dont les dimensions vont de 0,1 à 5 mm. Leur introduction dans le malaxeur peut être règlée par les dispositifs connus pour cet usage, tels que vis ou balances doseuses.

Le ou les diacrylate(s) (b) sont alimentés à l'état liquide dans la zone de malaxage. Leur introduction peuvent être effectuée au moyen d'une pompe doseuse. L'alimentation du réactif (b) peut être effectuée en un ou plusieurs points localisés de préférence en aval de la zone d'alimentation du ou des bis-imide(s) (a).

Le composé imidazole (c) peut être incorporé à l'état solide avec le réactif acrylate (b). Cependant, on préfère incorporer le composé imidazole (c) à l'état de solution dans un solvant polaire tel que ceux dont on a parlé ci-avant ; dans ce cas préféré, le composé imidazole (c) peut être très bien incorporé avec le réactif acrylate (b), mais son introduction dans le malaxeur peut être effectuée aussi en tout autre point de la zone de malaxage, de préférence en aval de la zone d'alimentation du réactif acrylate (b).

Le maintien de la zone de malaxage à la température choisie comprise entre 50° C et 180° C et, de préférence, entre 130° C et 160° C est généralement obtenu par chauffage contrôlé de l'enveloppe du malaxeur utilisé. En outre, il est également possible d'effectuer un chauffage contrôlé de la vis ou des vis sans fin de l'appareil. En ce qui concerne l'enveloppe, le chauffage peut être exercé de manière uniforme sur toute sa longueur mais on peut également disposer plusieurs zones de chauffage contiguës assurant à la zone de malaxage une température par exemple croissante dans le sens de progression de la matière. En amont du premier point d'introduction du réactif (b), on préfère que la température soit située dans l'intervalle 20 - 130° C.

Le temps de séjour des produits dans la zone de malaxage peut varier dans une certaine mesure en fonction du ou des bis-imide(s) (a) engagés, de la température adoptée et du rapport pondéral des réactifs mis en oeuvre. D'une manière générale, il est de l'ordre de 1 à 30 minutes. A la sortie du malaxeur, il est possible de régler le point de ramollissement du prépolymère (P) par chauffage de ce dernier dans un four dans des conditions de température et durée déterminées. A titre d'exemple, lorsque le réactif (a) est le N,N'-4,4'-diphénylméthane-bis-maléimide et le rapport r est voisin de 5/1, on obtient des prépolymères ayant des points de ramollissement de l'ordre de 50° C à 60° C pour une température de prépolymérisation de 155° C et un temps de séjour situé dans l'intervalle 5-10 minutes.

Les polymères selon l'invention intéressent les domaines de l'industrie qui requièrent des matériaux doués de bonnes propriétés mécaniques et électriques ainsi que d'une grande inertie chimique à des températures de 200° à 300°C. A titre d'exemples, ils conviennent pour la fabrication d'isolants en plaques ou tubulaires pour transformateurs électriques, de supports de circuits imprimés, de pignons, de bagues etc... Les articles préimprégnés sont utilisables pour la réalisation des pièces ayant des formes et des fonctions variées dans de nombreuses industries comme par exemple dans l'aéronautique. Ces pièces, appelées stratifiés, qui peuvent être de pièces de révolution sont obtenues par placage de plusieurs couches de préimprégnés sur une forme ou un support. On peut utiliser aussi les préimprégnés comme renforts ou comme moyen de réparation de pièces détériorées. On rappellera que pour faire par exemple des objets moulés, il est possible de partir, soit du mélange des réactifs (a) + (b) + (c), soit d'un prépolymère (P). Quand on part directement du mélange des réactifs, on donne à ce mélange la forme de l'objet désiré et on effectue ensuite le durcissement par chauffage. Quand on part du prépolymlère (P), il peut être moulé par simple coulée à chaud où par injection et on provoque ensuite son durcissement par chauffage.

Les exemples suivants sont donnés à titre illustratif, mais non limitatif.

<u>EXEMPLE 1</u>

Exemple qui décrit un polymère conforme à l'invention préparé par un procédé en discontinu.

Dans un réacteur équipé d'un agitateur et placé dans un bain d'huile thermostaté à 160° C, on introduit :
- 300 parties en poids de N,N'-4,4'-diphénylméthane bis-maléimide, ayant un point de ramollissement de 155° C, et
- 100 parties en poids de diacrylate de bisphénol A di(di-oxyéthylé) ; ce composé est disponible dans le commerce sous la marque déposée EBECRYL 150 de la Société UCB.

Le mélange est agité durant 30 minutes jusqu'à l'obtention d'une masse homogène. On ajoute alors 0,28 parties en poids d'imidazole sous la forme d'une solution à 17 % en poids dans la N-méthylpyrrolidone.

On maintient l'agitation du milieu réactionnel pendant 45 minutes sous 160° C, puis on coule le mélange sur un plateau. Après refroidissement, le prépolymère obtenu est broyé et on obtient une poudre jaune qui est soluble dans les solvants comme par exemple la N-méthylpyrrolidone et le diméthylformamide. Le prépolymère obtenu présente un point de ramollissement de 80° C ; sa viscosité, mesurée en solution à 50 % en poids dans la N-méthylpyrrolidone, est de 2,5 dPas (poises).

On utilise une solution de prépolymère à 50 % en poids dans la N-méthylpyrrolidone pour enduire un tissu de verre fabriqué par la Société PORCHER sous la référence 7628 dont le grammage est de 200

g/m² et ayant subi un traitement par du gamma-aminopropyltriéthoxysilane (silane A 1100 d'UNION CARBIDE). Le tissu imprégné contient 35 g de prépolymère pour 65 g de tissu ; on le sèche en atmosphère ventilée à 130° C pendant 5 minutes. On découpe ensuite 6 carrés (15 x 15 cm) que l'on empile avec une feuille de cuivre de 35 µm d'épaisseur placée sur l'une des faces extérieures de l'empilement et on place l'ensemble entre les plateaux d'une presse dans les conditions suivantes :
- pression : $40.10^5$ Pa,
- chauffage des plateaux de la presse : 15 minutes à 150° C, puis 45 minutes à 200° C.

Pendant l'operation de stratification , on observe un taux de fluage du polymère d'environ 20 % en poids. Après un traitement thermique complémentaire à 235° C pendant 6 heures, on examine l'adhérence du cuivre sur le stratifié à 6 plis préparé : cette adhérence, mesurée au dynamomètre par traction du cuivre à 90° C d'angle (selon la norme MIL P 55 617 B avec une vitesse de traction de 55 mm/min), est de l'ordre de 15 N/cm ; cette valeur se maintient après un vieillissement de 1000 heures à 200° C.

A titres d'essai comparatif, on a reproduit l'exemple 1 précédent, mais en absence d'imidazole. Le mélange réactionnel chauffé à 160° C se prend en masse après 1 heure 30 minutes de mélange. Après refroidissement et broyage, la poudre obtenue a un point de ramollissement de 70° C ; elle est très peu soluble dans les solvants précités. L'analyse montre que le bis-maléimide a été peu ou pas engagé dans une réaction avec le diacrylate. Le prépolymère ainsi obtenu ne convient pas pour les applications décrites, en particuliers pour la préparation de stratifiés.

EXEMPLE 2

Exemple qui décrit un polymère conforme à l'invention préparé par un procédé en continu.

L'appareillage utilisé est un malaxeur de laboratoire BUSS connu sous l'appellation "KO-Malaxeur" type PR 46. Ce malaxeur comprend une vis sans fin formée d'un arbre comportant des filets hélicoïdaux interrompus, les interrruptions formant des ailettes séparées ; elles est entraînée par un mécanisme approprié. La vis est logée dans un corps comprenant trois enveloppes cylindriques coaxiales contiguës à double paroi ; la paroi interne du corps de malaxage comporte des saillies en forme de dents. La vis est soumise à un mouvement de rotation et simultanément à un mouvement oscillatoire dans le direction de son axe, ce qui crée un échange de matière dans deux directions.

Dans le première enveloppe, on fait circuler de l'eau à 20° C et dans les deux autres, un fluide chauffé à 155° C. La vitesse de rotation de la vis est de 60 tours/minutes.

Dans la première partie du malaxeur (correspondant à la première enveloppe), on introduit du N,N'-4,4'-diphénylméthane-bis-maléimide par l'intermédiaire d'une balance doseuse à raison de 1172 g/h ; le bis-maléimide est introduit à l'état de grains dont la dimension moyenne est de l'ordre de 0,25 mm.

Dans la seconde partie du malaxeur (correpondant à la seconde enveloppe), on introduit le mélange diacrylate de bisphénol A di(di-oxyéthylé)/solution d'imidazole (conforme à l'exemple 1), à raison de 340 g/h.

Le dosage des réactifs est tel que le bis-maléimide représente 77,5 % du poids du mélange bis-maléimide/diacylate et l'imidazole 0,06 % du poids du même mélange.

Le temps de séjour moyen de la matière dans le malaxeur est de l'ordre de 6 minutes 30 secondes. A la sortie de l'appareil on recueille un prépolymère dont le point de ramollissement est de l'ordre de 55° C. Ce prépolymère porté à 170° C pendant 17 minutes présente un point de ramollissement de 80° C. Il est soluble dans des solvants comme par exemple la N-méthylpyrrolidone et le diméthylformamide et il présente une viscosité (mesurée comme indiqué à l'exemple 1) de 2,5 dPas (poises).

Avec le prépolymère ainsi obtenu, on prépare des préimprégnés et des stratifiés comportant 18 plis (18 couches de préimprégnés) dans les conditions décrites ci-avant à l'exemple 1 (à noter qu'aucune feuille de cuivre n'est utilisée ici). Après recuit à 235° C pendant 6 heures, les stratifiés présentent les caractéristiques mécaniques suivantes :
-résistance en flexion mesurée à 200° C (selon la norme NF T 51 001) : 340 MPa,
-module en flexion : 14 000 MPa.

Le prépolymère obtenu est soumis par ailleurs à des mesures en TMA ("Thermal Mechanical Analysis" ou Analyse Mécanique Thermique ; norme ASTM E 831-81 avec une vitesse de montée en température de 5° C/min). Sur le produit recuit à 235° C, on observe que le coefficient de dilatation moyen entre 40° C et 300° C est de 50 µm/m/°C.

**Revendications pour les Etats Contractants: AT, BE, CH, DE, FR, GB, IT, LI, LU, NL, SE**

1) Polymères à groupements imides caractérisés en ce qu'ils comprennent le produit de réaction, à une température allant de 50° C à 300° C, entre:
- (a) un N,N'-bis-imide ou une association de plusieurs bis-imides de formule:

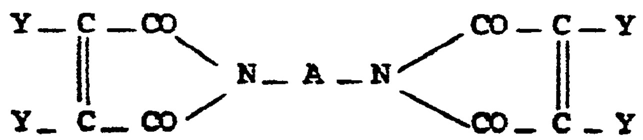

(I)

dans laquelle :
. les symboles Y, identiques ou différents, représentent chacun H, $CH_3$ ou Cl ;
. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule:

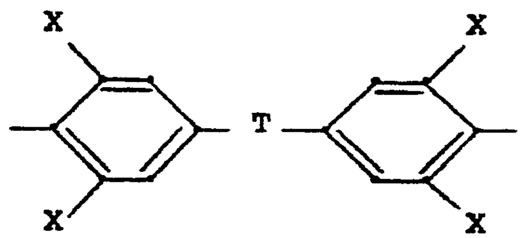

dans laquelle T représente un lien valentiel simple ou un groupement :

$-CH_2-$ ; 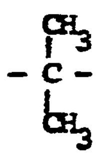 ; $-O-$ ; 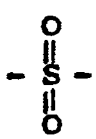 ; 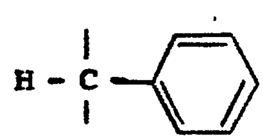 ; 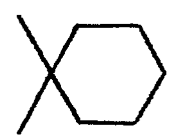 ;

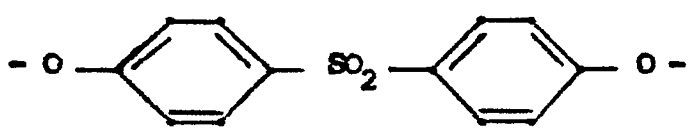

et les symboles X, identiques ou différents, représentent chacun un atome d'hydrogène, un radical méthyle, éthyle ou isopropyle ;
- et (b) un ou plusieurs diacrylate à structure aromatique de formule :

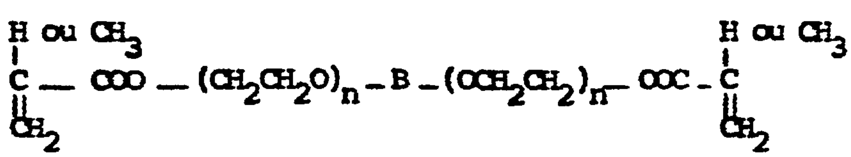

(II)

dans laquelle :
.le symbole B représente un radical divalent de formule :

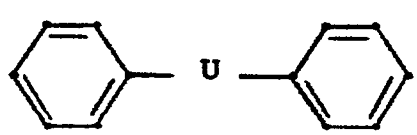

dans laquelle le symbole U représente un lien valentiel simple ou un groupement :

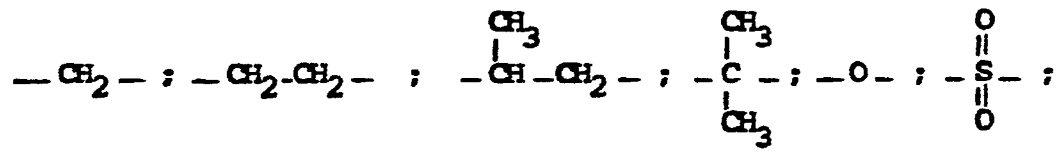

.les symboles n, identiques ou différents, représentent chacun un nombre égal à zéro, 1, 2, 3, 4 ou 5 ;
en présence de :
-(c) un composé imidazole.

2) Polymères selon la revendication 1, caractérisés en ce que le réactif (a) est le N,N'-4,4'-diphényl-méthane-bis-maléimide pris seul ou en mélange avec le N,N'-méthyl-2 phénylène-1,3-bis-maléimide, le N,N'-méthyl-4 phénylène-1,3-bis-maléimide et/ou le N,N'-méthyl-5 phénylène-1,3-bis-maléimide.

3) Polymères selon l'une des revendications 1 ou 2, caractérisés en ce que le réactif (b) est choisi dans le groupe formé par les diacrylates et les diméthacrylates des bisphénols A di(poly-oxyéthylés).

4) Polymères selon l'une quelconque des revendications 1 à 3, caractérisés en ce que le composé imidazole (c) répond à la formule générale :

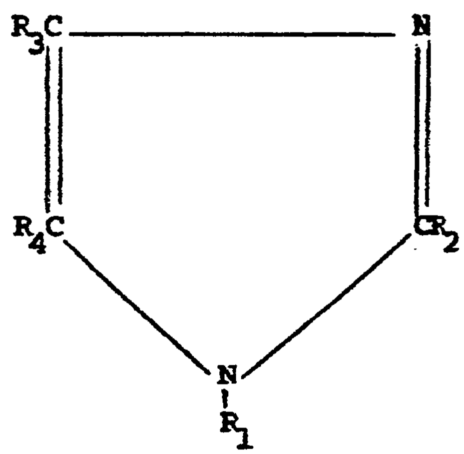

(III)

dans laquelle $R_1$, $R_2$, $R_3$ et $R_4$, identiques ou différents, représentent chacun : un atome d'hydrogène, un radical alkyle ou alcoxy ayant de 1 à 20 atomes de carbone, vinyle, phényle, nitro, $R_3$ pouvant former avec $R_4$ et les atomes de carbone auxquels sont liés ces radicaux un cycle unique comme par exemple un cycle benzénique.

5) Polymères selon la revendication 4, caractérisés en ce que le composé imidazole (c) est choisi dans le groupe formé par l'imidazole ou glyoxaline, le méthyl-1 imidazole, le méthyle-2 imidazole, le diméthyl-1,2 imidazole, le vinyl-1 imidazole, le vinyl-1 méthyl-2 imidazole et le benzimidazole.

6) Polymères selon l'une quelconque des revendications 1 à 5, caractérisés en ce que d'une part les quantités de N,N'-bis-imide(s) (a) et de diacrylate(s) (b) sont choisies de façon à ce que le rapport r :

$$\frac{\text{nombre de moles de bis-imide(s) (a)}}{\text{nombre de moles de diacrylate(s) (b)}}$$

se situe dans l'intervalle allant de 1,7/1 à 20/1, et d'autre part le taux de composé imidazole (c), exprimé en nombre de moles de compose (c) pour 100 g du mélange bis-imide(s) (a) + diacrylate(s) (b), se situe dans l'intervalle allant de $0,15.10^{-3}$ à $6.10^{-3}$.

7) Polymères selon l'une quelconque des revendications 1 à 6, caractérisés en ce qu'ils se trouvent sous forme de polymères durcis, insolubles dans les solvants usuels et ne présentant pas de ramollissement notable au dessous de la température à laquelle ils commencent à se dégrader.

8) Polymères selon l'une quelconque des revendications 1 à 6, caractérisés en ce qu'ils se trouvent sous forme de prépolymères thermodurcissables (P) solubles dans les solvants organiques polaires et présentent un point de ramollissement à une température inférieure à 200° C.

9) procédé de préparation de polymères durcis selon les revendications 1 à 7, caractérisé en ce qu'il consiste à chauffer le mélange des réactifs entre 50° C et 180° C pour former dans un premier temps un prépolymère (P), puis a provoqué le durcissement du prépolymère (P) par chauffage à une température comprise entre 150° C et 300° C.

10) Procédé de préparation de polymères thermodurcissables (P) selon les revendications 1 à 6 et 8, caractérisé en ce que l'on chauffe directement le mélange des réactifs à une température comprise entre 50° C et 180° C jusqu'à l'obtention d'un produit homogène liquide ou pâteux.

11) Procédé de préparation selon la revendication 9 ou 10, caractérisé en ce que l'on utilise un procédé de préparation en continu du prépolymère (P) consistant à introduire isolément le ou les bis-imide(s) (a) à l'état solide divisé, le ou les diacrylate(s) (b) à l'état liquide ou fondu et le composé imidazole (c) à l'état solide ou en solution dans un malaxeur à vis extrudeuse.

12) Procédé de préparation selon la revendication 11, caractérisé en ce que l'on utilise un malaxeur comportant une vis sans fin à filetage interrompu effectuant simultanément un mouvement de rotation et un mouvement oscillatoire dans la direction de l'axe, logée dans une enveloppe comportant des dents qui coopèrent avec les ailettes interrompues de la vis.

13) Procédé selon l'une des revendications 11 et 12, caractérisé en ce que le réactif acrylate (b) et le composé imidazole (c) sont alimentés en aval de la zone d'alimentation du réactif imide (a).

14) Application des polymères selon l'une quelconque des revendications 1 à 8 à la fabrication d'objets moulés, de statifiés et d'articles à structure cellulaire.

**Revendications pour l'Etat Contractant: ES**

1) Procédé de préparation de polymères à groupements imides se trouvant sous forme de polymères durcis, insolubles dans le solvants usuels et ne présentant pas de ramollissement notable au dessous de la température à laquelle ils commencent à se dégrader, caractérisés par le fait que l'on chauffe directement à une température comprise entre 50° C et 300° C le mélange des réactifs suivants :
- (a) un N,N'-bis-imide ou une association de plusieurs bis-imides de formule:

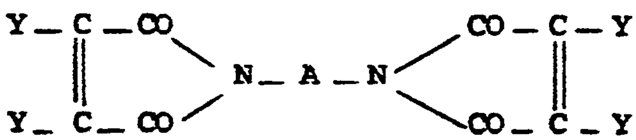

(I)

dans laquelle :
. les symboles Y, identiques ou différents, représentent chacun H, $CH_3$ ou Cl ;
. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule:

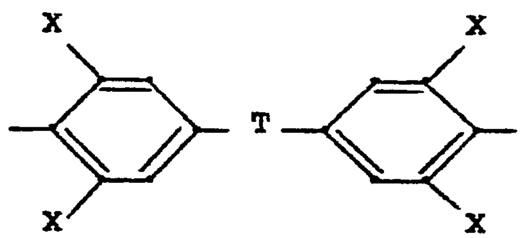

dans laquelle T représente un lien valentiel simple ou un groupement :

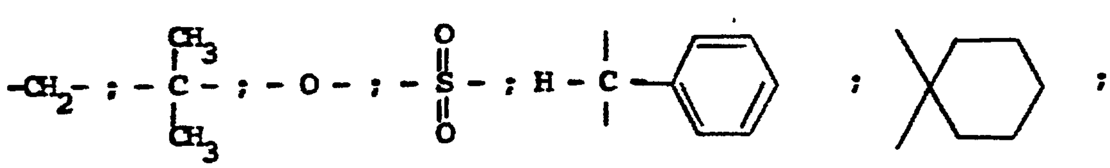

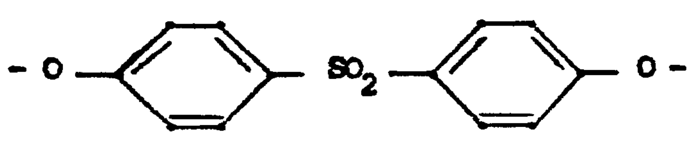

et les symboles X, identiques ou différents, représentent chacun un atome d'hydrogène, un radical méthyle, éthyle ou isopropyle ;

- (b) un ou plusieurs diacrylate à structure aromatique de formule :

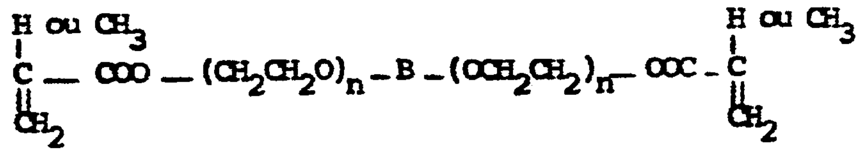

(II)

dans laquelle :

. le symbole B représente un radical divalent de formule :

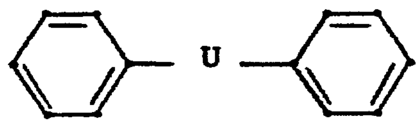

dans laquelle le symbole U représente un lien valentiel simple ou un groupement :

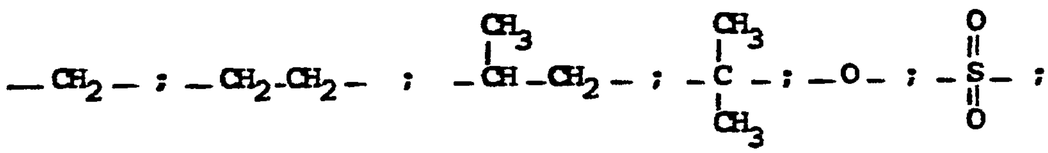

. les symboles n, identiques ou différents, représentent chacun un nombre égal à zéro, 1, 2, 3, 4 ou 5 ;

- et (c) un composé imidazole.

2) Procédé de préparation de polymères à groupements imides se trouvant sous forme de prépolymères thermodurcissables (P) solubles dans les solvants organiques polaires et présentant un point de ramollissement à une température inférieure à 200° C, caractérisés par le fait que l'on chauffe directement le mélange des réactifs (a), (b) et (c) définis ci-avant dans la revendication 1 à une température comprise entre 50° C et 180° C jusqu'à l'obtention d'un produit homogène liquide ou pâteaux.

3) Procédé selon la revendication 1, caractérisé en ce qu'il consiste à chauffer le mélange des réactifs entre 50° C et 180° C pour former dans un premier temps un prépolymère (P), puis à provoquer le durcissement du prépolymère (P) par chauffage à une température comprise entre 150° C et 300° C.

4) Procédé selon la revendication 2 ou 3, caractérisé en ce que l'on utilise un procédé de préparation en continu du prépolymère (P) consistant à introduire isolément le ou les bis-imide(s) (a) à l'état solide divisé, le ou les diacrylate(s) (b) à l'état liquide ou fondu et le composé imidazole (c) à l'état solide ou en solution dans un malaxeur à vis extrudeuse.

5) Procédé selon la revendication 4, caractérisé en ce que l'on utilise un malaxeur comportant une vis sans fin à filetage interrompu effectuant simultanément un mouvement de rotation et un mouvement oscillatoire dans la direction de l'axe, logée dans une enveloppe comportant des dents qui coopèrent avec les ailettes interrompues de la vis.

6) Procédé selon la revendication 4 ou 5, caractérisé en ce que le réactif acrylate (b) et le composé imidazole (c) sont alimentés en aval de la zone d'alimentation du réactif imide (a).

7) Procédé selon l'une quelconque des revendications 1 à 6, caractérisés en ce que le réactif (a) est le N,N'-4,4'diphénylméthane-bis-maléimide pris seul ou en mélange avec le N,N'-méthyl-2 phénylène-1,3-bis-maléimide, le N,N'-méthyl-4 phénylène-1,3-bis-maléimide et/ou le N,N'-méthyl-5 phénylène-1,3-bis-maléimide.

8) Procédé selon l'une quelconque des revendications 1 à 7, caractérisés en ce que le réactif (b) est choisi dans le groupe formé par les diacrylates et les diméthacrylates des bisphénols A di(poly-oxyéthylés).

9) Procédé selon l'une quelconque des revendications 1 à 8, caractérisés en ce que le composé imidazole (c) répond à la formule générale :

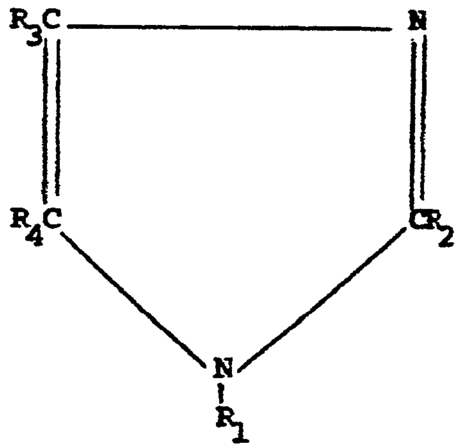

(III)

dans laquelle $R_1$, $R_2$, $R_3$ et $R_4$, identiques ou différents, représentent chacun : un atome d'hydrogène, un radical alkyle ou alcoxy ayant de 1 à 20 atomes de carbone, vinyle, phényle, nitro, $R_3$ pouvant former avec $R_4$ et les atomes de carbone auxquels sont liés ces radicaux un cycle unique comme par exemple un cycle benzénique.

10) Procédé selon la revendication 9, caractérisés en ce que le composé imidazole (c) est choisi dans le groupe formé par l'imidazole ou glyoxaline, le méthyl-1 imidazole, le méthyl-2 imidazole, le diméthyl-1,2 imidazole, le vinyl-1 imidazole, le vinyl-1 méthyl-2 imidazole et le benzimidazole.

11) Procédé selon l'une quelconque des revendications 1 à 10, caractérisés en ce que d'une part les quantités de N,N'-bis-imide(s) (a) et de diacrylate(s) (b) sont choisies de façon à ce que le rapport r :

$$\frac{\text{nombre de moles de bis-imide(s) (a)}}{\text{nombre de moles de diacrylate(s) (b)}}$$

se situe dans l'intervalle allant de 1,7/1 à 20/1, et d'autre part le taux de composé imidazole (c), exprimé en nombre de moles de composé (c) pour 100 g du mélange bis-imide(s) (a) + diacrylate(s) (b), se situe dans l'intervalle allant de $0{,}15.10^{-3}$ à $6.10^{-3}$.

12) Application des polymères préparés selon l'une quelconque des revendications 1 à 11 à la fabrication d'objets moulés, de stratifiés et d'articles à structure cellulaire.

**Claims for the Contracting States: AT, BE, CH, DE, FR, GB, IT, LI, LU, NL, SE**

1. Polymers containing imide groups, characterized in that they comprise the product of reaction, at a temperature ranging from 50°C to 300°C, between:

– (a) an N, N'-bisimide or a combination of several bisimides of formula:

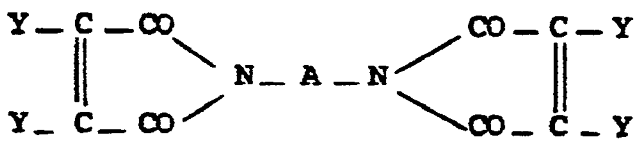

. (I)

in which: each of the symbols Y, which are identical or different, denotes H, $CH_3$ or Cl, the symbol A denotes a divalent radical chosen from the group consisting of the following radicals: cyclohexylenes, phenylenes, 4-methyl-1,3-phenylene, 2-methyl-1,3-phenylene, 5-methyl-1,3-phenylene, 2,5-diethyl-3-methyl-1,4-phenylene, and the radicals of the formula:

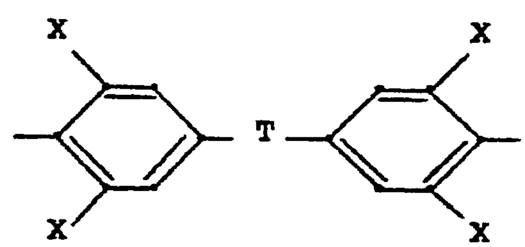

in which T denotes a single valency bond or a group:

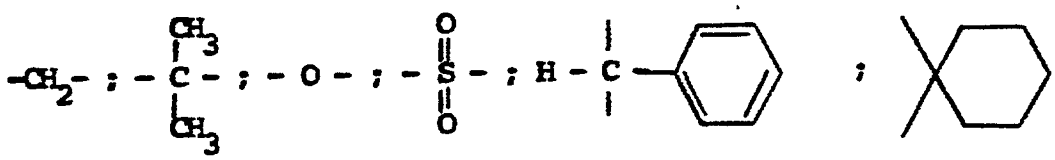

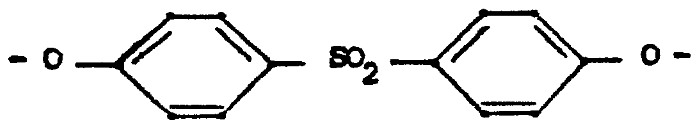

and each of the symbols X, which are identical or different, denotes a hydrogen atom or a methyl, ethyl or isopropyl radical,

– and (b) one or more diacrylates with an aromatic structure, of formula:

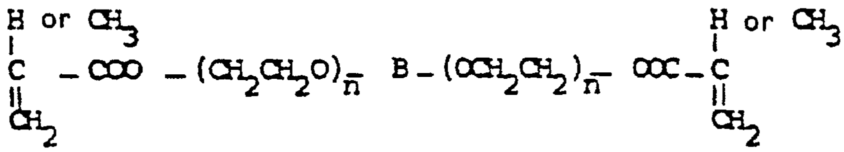 (II)

in which: the symbol B denotes a divalent radical of formula:

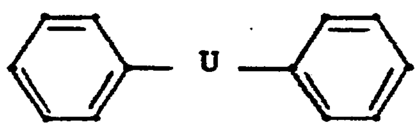

in which the symbol U denotes a single valency bond or a group:

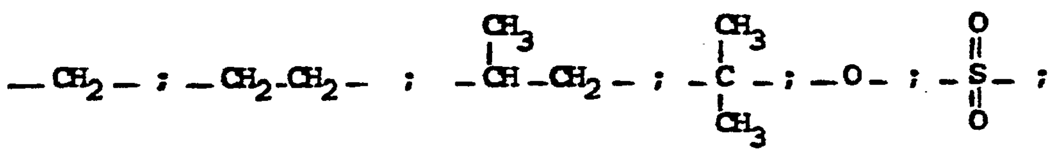

each of the symbols n, which are identical or different, denotes a number equal to zero, 1, 2, 3, 4 or 5, in the presence of:

– (c) an imidazole compound.

2. Polymers according to Claim 1, characterized in that the reactant (a) is N,N'-4,4'-diphenylmethanebismaleimide taken by itself or mixed with N,N'-2-methyl-1,3-phenylenebismaleimide, N,N'-4-methyl-1,3-phenylenebismaleimide and/or N,N'-5-methyl-1,3-phenylenebismaleimide.

3. Polymers according to either of Claims 1 and 2, characterized in that the reactant (b) is chosen from the group consisting of the diacrylates and the dimethacrylates of di(polyoxyethylated) bisphenols A.

4. Polymers according to any one of Claims 1 to 3, characterized in that the imidazole compound (c) corresponds to the general formula:

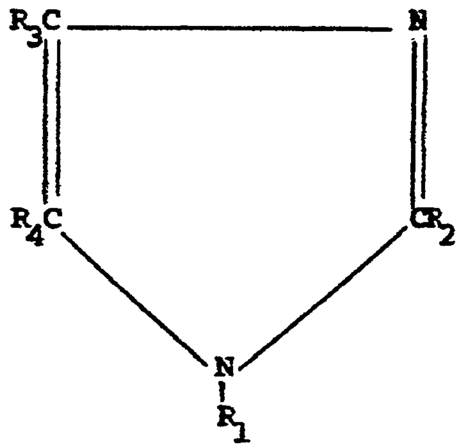

(III)

in which each of $R_1$, $R_2$, $R_3$ and $R_4$, which are identical or different, denotes: a hydrogen atom, an alkyl or alkoxy radical containing from 1 to 20 carbon atoms, or a vinyl, phenyl or nitro radical, it being possible for $R_3$ to form with $R_4$ and the carbon atoms to which these radicals are linked a single ring such as, for example, a benzene ring.

5. Polymers according to Claim 4, characterized in that the imidazole compound (c) is chosen from the group consisting of imidazole or glyoxaline, 1-methylimidazole, 2-methylimidazole, 1,2-dimethylimidazole, 1-vinylimidazole, 1-vinyl-2-methylimidazole and benzimidazole.

6. Polymers according to any one of Claims 1 to 5, characterized in that, on the one hand, the quantities of N,N'-bisimide(s) (a) and of diacrylate(s) (b) are chosen so that the ratio r:

$$\frac{\text{number of moles of bisimide(s) (a)}}{\text{number of moles of diacrylate(s) (b)}}$$

is situated in the range from 1.7/1 to 20/1 and, on the other hand, the proportion of imidazole compound (c), expressed as the number of moles of compound (c) per 100 g of the mixture bisimide(s) (a) + diacrylate(s) (b), is situated in the range from $0.15 \times 10^{-3}$ to $6 \times 10^{-3}$.

7. Polymers according to any one of Claims 1 to 6, characterized in that they are in the form of cured polymers, insoluble in the usual solvents and exhibit no appreciable softening below the temperature at which they begin to degrade.

8. Polymers according to any one of Claims 1 to 6, characterized in that they are in the form of thermosetting prepolymers (P) soluble in polar organic solvents and have a softening point at a temperature below 200°C.

9. Process for the preparation of cured polymers according to Claims 1 to 7, characterized in that it consists in heating the mixture of the reactants between 50°C and 180°C to form, in a first step, a prepolymer (P), and then causing the prepolymer (P) to cure by heating to a temperature of between 150°C and 300°C.

10. Process for the preparation of thermosetting polymers (P) according to Claims 1 to 6 and 8, characterized in that the mixture of the reactants is heated directly to a temperature of between 50°C and 180°C until a homogeneous liquid or pasty product is obtained.

11. Preparative process according to Claim 9 or 10, characterized in that a process for the continuous preparation of the prepolymer (P) is employed, consisting in separately introducing the bisimide(s) (a) in a divided solid state, the diacrylate(s) (b) in a liquid or molten state and the imidazole compound (c) in a solid state or in solution into an extruder-screw mixer.

12. Preparative process according to Claim 11, characterized in that a mixer comprising an endless screw with interrupted flights simultaneously performing a rotary motion and an oscillating motion in the axial direction and housed in a barrel comprising teeth which interact with the interrupted fins of the screw, is employed.

13. Process according to either of Claims 11 and 12, characterized in that the acrylate reactant (b) and the imidazole compound (c) are fed downstream of the imide reactant (a) feed zone.

14. Application of the polymers according to any one of Claims 1 to 8 to the manufacture of moulded or laminated articles of cellular structure.

**Claims for the Contracting State: ES**

1. Process for the preparation of polymers containing imide groups which are in the form of cured polymers, insoluble in the usual solvents and exhibiting no appreciable softening below the temperature at which they begin to degrade, characterized in that the mixture of the following reactants is heated directly to a temperature of between 50°C and 300°C.

– (a) an N,N'-bisimide or a combination of several bisimides of formula:

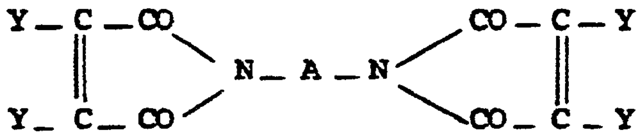

(I)

in which each of the symbols Y, which are identical or different, denotes H, $CH_3$ or Cl, the symbol A denotes a divalent radical chosen from the group consisting of the following radicals: cyclohexylenes, phenylenes, 4-methyl-1,3-phenylene, 2-methyl-1,3-phenylene, 5-methyl-1,3-phenylene, 2,5-diethyl-3-methyl-1,4-phenylene, and the radicals of formula:

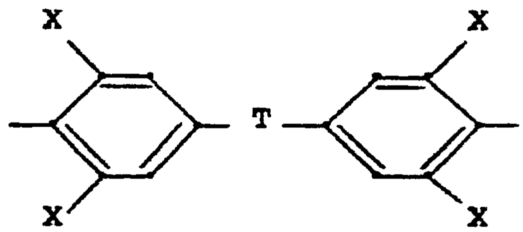

in which T denotes a single valency bond or a group:

$-CH_2-$ ; 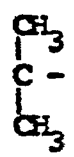 ; $-O-$ ; 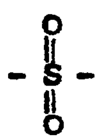 ; 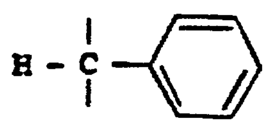 ; 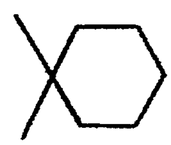

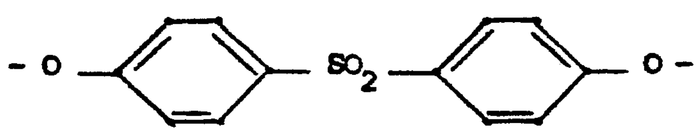

and the symbols X, which are identical or different, each denote a hydrogen atom or a methyl, ethyl or isopropyl radical,

– (b) one or more diacrylates with an aromatic structure, of formula:

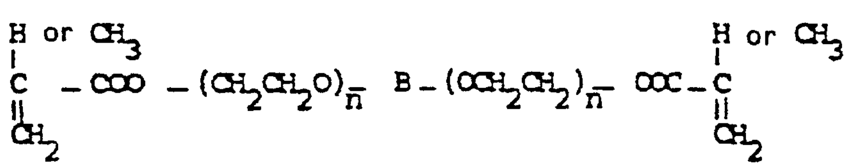

(II)

in which: the symbol B denotes a divalent radical of formula:

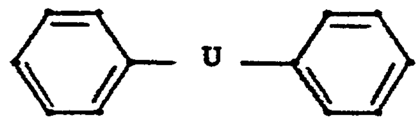

in which the symbol U denotes a single valency bond or a group:

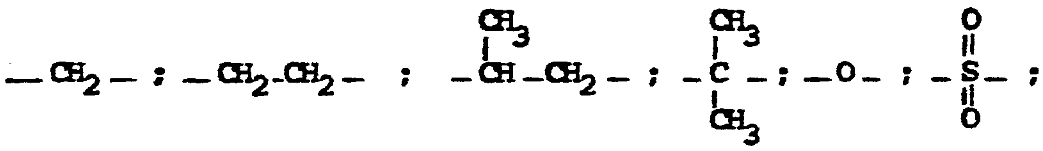

each of the symbols n, which are identical or different, denotes a number equal to zero, 1, 2, 3, 4 or 5,
– and (c) an imidazole compound.

2. Process for the preparation of polymers containing imide groups which are in the form of thermosetting prepolymers (P) soluble in polar organic solvents and having a softening point at a temperature below 200°C, characterized in that the mixture of the reactants (a), (b) and (c) as defined above in Claim 1 is heated directly to a temperature of between 50°C and 180°C until a homogeneous liquid or pasty product is obtained.

3. Process according to Claim 1, characterized in that it consists in heating the mixture of the reactants between 50°C and 180°C to form, in a first step, a prepolymer (P), and then causing the prepolymer (P) to cure by heating to a temperature of between 150°C and 300°C.

4. Process according to Claim 2 or 3, characterized in that a process for the continuous preparation of the prepolymer (P) is employed, consisting in separately introducing the bisimide(s) (a) in a divided solid state, the diacrylate(s) (b) in a liquid or molten state and the imidazole compound (c) in a solid state or in solution into an extruder-screw mixer.

5. Process according to Claim 4, characterized in that a mixer comprising an endless screw with interrupted flights simultaneously performing a rotary motion and an oscillating motion in the axial direction and housed in a barrel comprising teeth which interact with the interrupted fins of the screw, is employed.

6. Process according to Claim 4 or 5, characterized in that the acrylate reactant (b) and the imidazole compound (c) are fed downstream of the imide reactant (a) feed zone.

7. Process according to any one of Claims 1 to 6, characterized in that the reactant (a) is N,N'-4,4'-diphenylmethanebismaleimide taken by itself or mixed with N,N'-2-methyl-1,3-phenylenebismaleimide, N,N'-4-methyl-1,3-phenylenebismaleimide and/or N,N'-5-methyl-1,3-phenylenebismaleimide.

8. Process according to any one of Claims 1 to 7, characterized in that the reactant (b) is chosen from the group consisting of the diacrylates and the dimethacrylates of di(polyoxyethylated) bisphenols A.

9. Process according to any one of Claims 1 to 8, characterized in that the imidazole compound (c) corresponds to the general formula

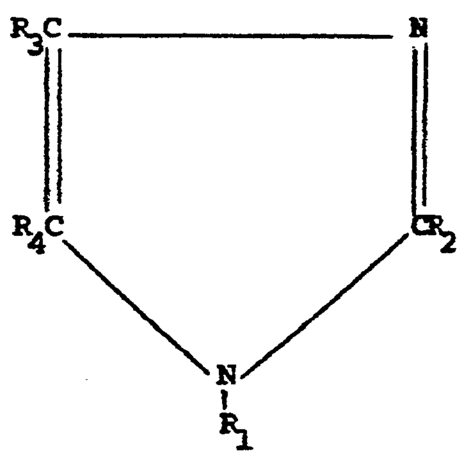

(III)

in which each of $R_1$, $R_2$, $R_3$ and $R_4$, which are identical or different, denotes: a hydrogen atom, an alkyl or alkoxy radical containing from 1 to 20 carbon atoms, or a vinyl, phenyl or nitro radical, it being possible for $R_3$ to form with $R_4$ and the carbon atoms to which these radicals are linked a single ring such as, for example, a benzene ring.

10. Process according to Claim 9, characterized in that the imidazole compound (c) is chosen from the group consisting of imidazole or glyoxaline, 1-methylimidazole, 2-methylimidazole, 1,2-dimethylimidazole, 1-vinylimidazole, 1-vinyl-2-methylimidazole and benzimidazole.

11. Process according to any one of Claims 1 to 10, characterized in that, on the one hand, the quantities of N,N'-bisimide(s) (a) and of diacrylate(s) (b) are chosen so that the ratio r:

$$\frac{\text{number of moles of bisimide(s) (a)}}{\text{number of moles of diacrylate(s) (b)}}$$

(b) is situated in the range from 1.7/1 to 20/1 and, on the other hand, the proportion of imidazole compound (c), expressed as the number of moles of compound (c) per 100g of the mixture bisimide(s) (a) + diacrylate(s) (b), is situated in the range from $0.15 \times 10^{-3}$ to $6 \times 10^{-3}$.

12. Application of the polymers prepared according to any one of Claims 1 to 11 to the manufacture of moulded or laminated articles and of articles of cellular structure.

**Patentansprüche für die Vertragsstaaten: AT, BE, CH, DE, FR, GB, IT, LI, LU, NL, SE**

1. Polymere mit Imidgruppen, dadurch gekennzeichnet, daß sie das Produkt der Reaktion bei einer Temperatur von 50 bis 300°C enthalten, zwischen:

– (a) einem N,N'-Bisimid oder einer Assoziation mehrerer Bisimide der Formel

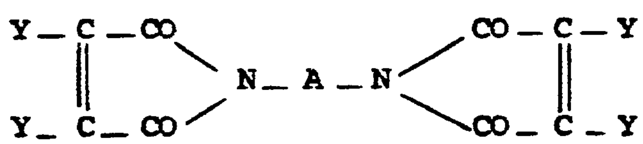

(I)

worin

– die Symbole Y, die gleich oder verschieden sind, jeweils für H, $CH_3$ oder Cl stehen;

– das Symbol A einen zweiwertigen Rest bedeutet, ausgewählt unter den Cyclohexylen-, Phenylen-, 4-Methyl-1,3-phenylen-, 2-Methyl-1,3-phenylen-, 5-Methyl-1,3-phenylen-, 2,5-Diethyl-2-methyl-1,4-phenylenresten und den Resten der Formel

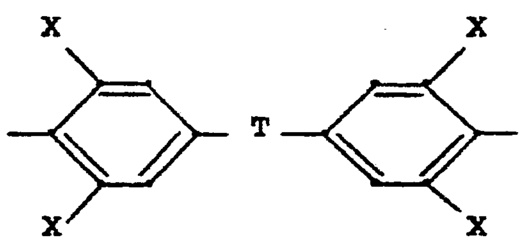

worin T für eine einfache Valenzbindung oder eine Gruppe

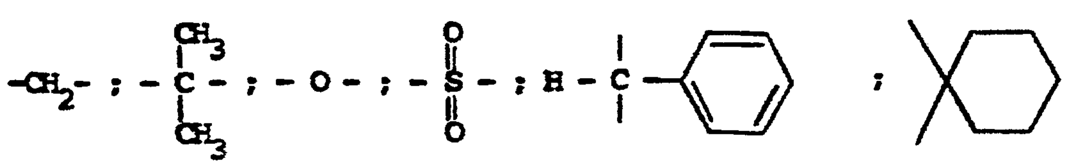

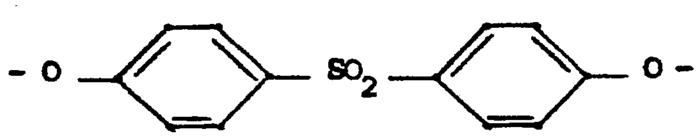

steht, und die Symbole X, die gleich oder verschieden sind, jeweils für ein Wasserstoffatom, einen Methyl-, Ethyl- oder Isopropylrest stehen; und

– (b) einem oder mehreren Diacrylaten mit aromatischer Struktur der Formel

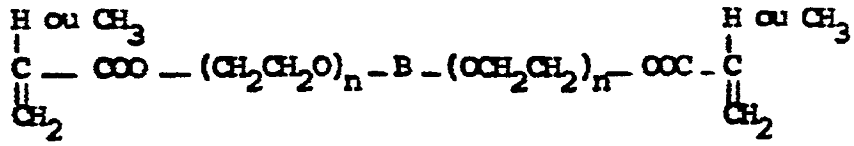

(II)

worin das Symbol B einen zweiwertigen Rest der Formel

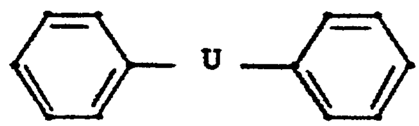

wiedergibt, worin das Symbol U für eine einfache Valenzbindung oder eine Gruppe

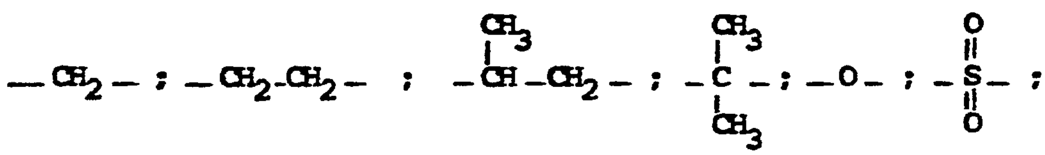

steht, die Symbole n, die gleich oder verschieden sind, jeweils eine Zahl entsprechend 0, 1, 2, 3, 4 oder 5 wiedergeben; in Anwesenheit von

– (c) einer Imidazolverbindung

2. Polymere gemäß Anspruch 1, dadurch gekennzeichnet, daß das Reagenz (a) N,N'-4-4'-Diphenylmethan-bismaleinimid allein oder in Mischung mit N,N'-2-Methyl-1,3-phenylenbismaleinimid, N,N'-4-Methyl-1,3-phenylen-bismaleinimid und/oder N,N'-5-Methyl-1,3-phenylen-bismaleinimid ist.

3. Polymere gemäß einem der Ansprüche 1 oder 2, dadurch gekennzeichnet, daß das Reagenz (b) unter den Diacrylaten und den Dimethacrylaten der di-(polyoxethylierten) Bisphenole A ausgewählt ist.

4. Polymere gemäß einem der Ansprüche 1 bis 3, dadurch gekennzeichnet, daß die Imidazolverbindung (c) der allgemeinen Formel

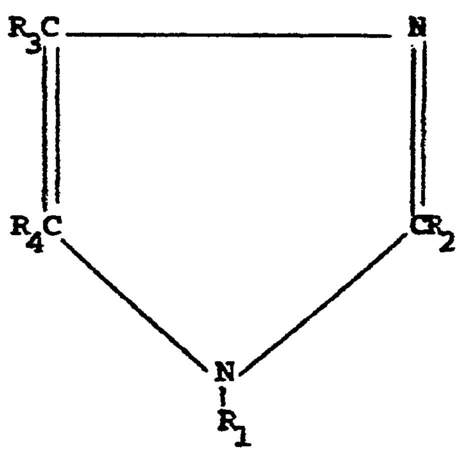

(III)

entspricht, worin $R_1$, $R_2$, $R_3$ und $R_4$, die gleich oder verschieden sind, jeweils ein Wasserstoffatom, einen Alkyl- oder Alkoxyrest mit 1 bis 20 Kohlenstoffatomen, eine Vinyl-, Phenyl- oder Nitrogruppe bedeuten, wobei $R_3$ mit $R_4$ und den Kohlenstoffatomen, an den diese Reste gebunden sind, einen einzigen Ring, wie z.B. einen Benzolring, bilden können.

5. Polymere gemäß Anspruch 4, dadurch gekennzeichnet, daß die Imidazolverbindung (c) unter Imidazol oder Glyoxalin, 1-Methylimidazol, 2-Methylimidazol, 1,2-Dimethylimidazol, 1-Vinylimidazol, 1-Vinyl-2-methylimidazol und Benzimidazol ausgewählt ist.

6. Polymere gemäß einem der Ansprüche 1 bis 5, dadurch gekennzeichnet, daß einerseits die Mengen des N,N'-Bisimids bzw. der N,N'-Bismide (a) und des Diacrylats bzw. der Diacrylate (b) derart gewählt sind, daß das Verhältnis r

$$\frac{\text{Zahl der Mole Bisimid(e) (a)}}{\text{Zahl der Mole Diacrylat(e) (b)}}$$

in einem Bereich von 1,7/1 bis 20/1 liegt und andererseits der Gehalt an Imidazolverbindung (c), ausgedrückt als Anzahl der Mole an Verbindung (c) je 100 g des Gemisches Bisimid(e) (a) + Diacrylat(e) (b) im Bereich von $0{,}15 \times 10^{-3}$ bis $6 \times 10^{-3}$ liegt.

7. Polymere gemäß einem der Ansprüche 1 bis 6, dadurch gekennzeichnet, daß sie in Form von gehärteten Polymeren vorliegen, die in üblichen Lösungsmitteln unlöslich sind und keine merkliche Erweichung unterhalb der Temperatur, bei der sie sich zu zersetzen beginnen, zeigen.

8. Polymere gemäß einem der Ansprüche 1 bis 6 dadurch gekennzeichnet, daß sie in Form von wärmehärtbaren Prepolymeren (P), die in polaren, organischen Lösungsmitteln löslich sind und einen Erweichungspunkt bei einer Temperatur unterhalb von 200°C besitzen, vorliegen.

9. Verfahren zur Herstellung von gehärteten Polymeren gemäß den Ansprüchen 1 bis 7, dadurch gekennzeichnet, daß es darin besteht, die Mischung der Reagenzien zwischen 50 und 180°C zu erhitzen, um zu einem ersten Zeitpunkt ein Prepolymeres (P) zu bilden, hiernach die Härtung des Prepolymeren (P) durch Erhitzen bei einer Temperatur zwischen 150 und 300°C herbeiführt.

10. Verfahren zur Herstellung von wärmehärtbaren Polymeren (P) gemäß den Ansprüchen 1 bis 6 und 8, dadurch gekennzeichnet, daß man direkt das Gemisch der Reagenzien bei einer Temperatur zwischen 50 und 180°C bis zur Erzielung eines homogenen, flüssigen oder pastenförmigen Produkts erhitzt.

11. Verfahren gemäß Anspruch 9 oder 10, dadurch gekennzeichnet, daß man ein kontinuierliches Verfahren zur Herstellung des Prepolymeren (P) anwendet, daß darin besteht, isoliert das oder die Bisimid(e) (a) in zerteiltem festen Zustand, das oder die Diacrylat(e) (b) in flüssigem oder geschmolzenem Zustand und die Imidazolverbindung (c) in festem Zustand oder in Lösung in einem Mischer mit einer Extruderschnecke einbringt.

12. Verfahren gemäß Anspruch 11, dadurch gekennzeichnet, daß man einen Mischer verwendet, der eine Endlosschnecke mit einem unterbrochenem Gewinde enthält und zugleich eine Rotationsbewegung und eine Oszilationsbewegung in Richtung der Achse bewirkt, die in einer Ummantelung gelegen ist, welche Zähne aufweist, die mit den unterbrochenen Flügeln der Schnecke zusammenarbeiten.

13. Verfahren gemäß einem der Ansprüche 11 und 12, dadurch gekennzeichnet, daß das Acrylatreagenz (b) und die Imidazolverbindung (c) stromabwärts der Zufuhrzone des Imidreagenz (a) zugeführt werden.

14. Verwendung der Polymeren gemäß einem der Ansprüche 1 bis 8 zur Herstellung von Formgegenständen, geschichteten Gegenständen und Gegenständen mit Zellstruktur.

**Patentansprüche für den Vertragsstaat: ES**

1. Verfahren zur Herstellung von Polymeren mit Imidgruppen, die in Form von gehärteten, in üblichen Lösungsmitteln unlöslichen Polymeren vorliegen und keine merkliche Erweichung unterhalb der Temperatur, bei der sie sich zu zersetzen beginnen, zeigen, dadurch gekennzeichnet, daß man direkt bei einer Temperatur zwischen 50 und 300°C das Gemisch der folgenden Reagenzien erwärmt:

– (a) ein N,N'-Bisimid oder eine Assoziation von mehreren Bisimiden der Formel

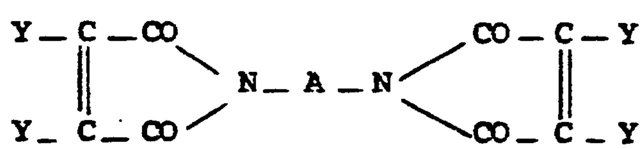

(I)

worin die Symbole Y, die gleich oder verschieden sind, jeweils H, $CH_3$ oder Cl bedeuten, das Symbol A einen zweiwertigen Rest bedeutet, ausgewählt unter den Cyclohexylen-, Phenylen-, 4-Methyl-, 1,3-phenylen-, 2-Methyl-1,3-phenylen-, 5-Methyl-1,3-phenylen-, 2,5-Diethyl-3-methyl-1,4-phenlyenresten und den Resten der Formel

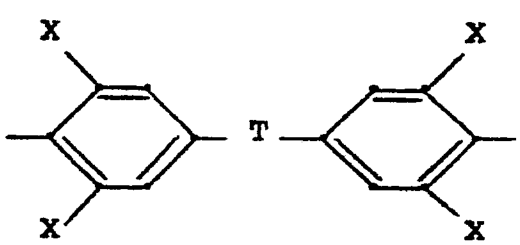

worin T für eine einfache Valenzbindung oder eine Gruppe

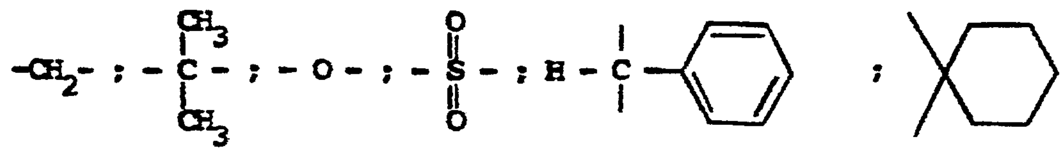

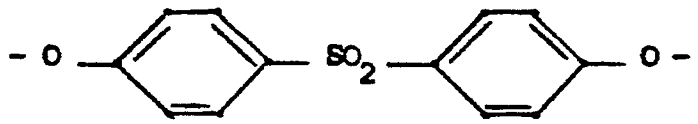

steht, und die Symbole X, die gleich oder verschieden sind, jeweils ein Wasserstoffatom, eine Methyl-, Ethyl- oder Isopropylgruppe bedeuten,

– (b) ein oder mehrere Diacrylate mit aromatischer Struktur der Formel

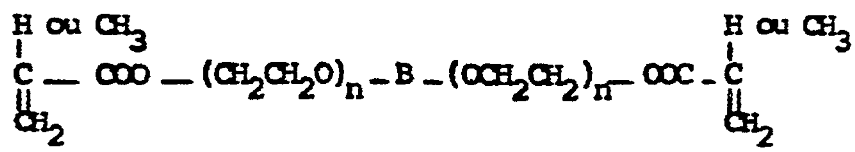 (II)

worin das Symbol B einen zweiwertigen Rest der Formel

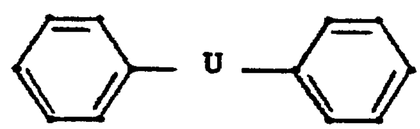

wiedergibt, worin das Symbol U eine einfache Valenzbindung oder eine Gruppe

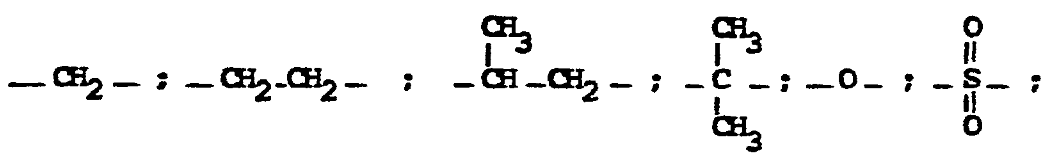

bedeutet, die Symbole n, die gleich oder verschieden sind, jeweils eine Zahl entsprechend 0, 1, 2, 3, 4 oder 5 bedeuten, und

– (c) eine Imidazolverbindung.

2. Verfahren zur Herstellung von Polymeren mit Imidgruppen, die in Form von wärmehärtbaren Prepolymeren (P), die in polaren organischen Lösungsmitteln löslich sind und einen Erweichungspunkt bei einer Temperatur von niedriger als 200°C besitzen, vorliegen, dadurch gekennzeichnet, daß man direkt das Gemisch der Reagenzien (a), (b) und (c), wie vorstehend in Anspruch 1 definiert, bei einer Temperatur zwischen 50 und 180°C bis zur Erzielung eines flüssigen oder pastenförmigen homogenen Produkts erhitzt.

3. Verfahren gemäß Anspruch 1, dadurch gekennzeichnet, daß es darin besteht, daß man das Gemisch der Reagenzien zwischen 50 und 180°C erhitzt, um zu einem ersten Zeitpunkt ein Prepolymeres (P) zu bilden, und hiernach die Härtung des Prepolymeren (P) durch Erhitzen auf eine Temperatur zwischen 150 und 300°C vornimmt.

4. Verfahren gemäß Anspruch 2 oder 3, dadurch gekennzeichnet, daß man ein Verfahren zur kontinuierlichen Herstellung des Prepolymeren (P) anwendet, daß darin besteht, isoliert das oder die Bisimid(e) (a) in zerteiltem, festen Zustand, das oder die Diacrylat(e) (b) in flüssigem oder geschmolzenem Zustand und die Imidazolverbindung (c) in festem Zustand oder in Lösung in einem Mischer mit einer Extruderschnecke einzubringen.

5. Verfahren gemäß Anspruch 4, dadurch gekennzeichnet, daß man einen Mischer verwendet, der eine Endlosschnecke mit einem unterbrochenen Gewinde besitzt und gleichzeitig eine Rotations- und eine Oszillationsbewegung in Richtung der Achse bewirkt, die in einer Ummantelung liegt, welche Zähne besitzt, die mit den unterbrochenen Flügeln der Schnecke zusammenarbeiten.

6. Verfahren gemäß Anspruch 4 oder 5, dadurch gekennzeichnet, daß das Acrylatreagenz (b) und die Imidazolverbindung (c) stromabwärts der Zone für die Zufuhr des Imidreagenz (a) zugeführt werden.

7. Verfahren gemäß einem der Ansprüche 1 bis 6, dadurch gekennzeichnet, daß das Reagenz (a) N,N'-4,4'-Diphenylmethan-bismaleinimid allein oder im Gemisch mit N,N'-2-Methyl-1,3-phenylenbismaleinimid, N,N'-4-Methyl-1,3-phenylen-bismaleinimid und/oder N,N'-5-Methyl-1,3-phenylen-bismaleinimid ist.

8. Verfahren gemäß einem der Ansprüche 1 bis 7, dadurch gekennzeichnet, daß das Reagenz (b) unter den Diacrylaten und den Dimethacrylaten der di-(polyoxethylierten) Bisphenole A ausgewählt ist.

9. Verfahren gemäß einem der Ansprüche 1 bis 8, dadurch gekennzeichnet, daß die Imidazolverbindung (c) der allgemeinen Formel

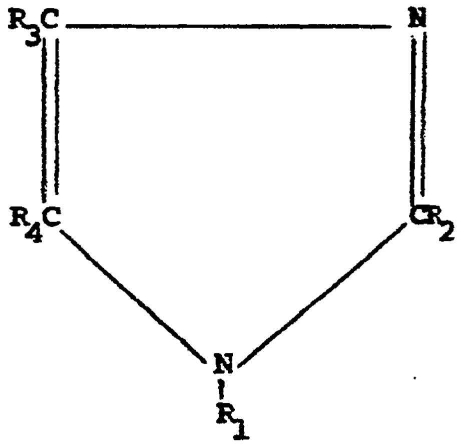

(III)

entspricht, worin $R_1$, $R_2$, $R_3$ und $R_4$, die gleich oder verschieden sind, jeweils ein Wasserstoffatom, einen Alkyl- oder Alkoxyrest mit 1 bis 20 Kohlenstoffatomen, eine Vinyl-, Phenyl- oder Nitrogruppe wiedergeben, wobei $R_3$ mit $R_4$ und den Kohlenstoffatomen, an denen diese Reste gebunden sind, einen einzigen Ring, wie z.B. einen Benzolring bilden können.

10. Verfahren gemäß Anspruch 9, dadurch gekennzeichnet, daß die Imidazolverbindung (c) unter Imidazol oder Glyoxalin, 1-Methylimidazol, 2-Methylimidazol, 1,2-Dimethylimidazol, 1-Vinylimidazol, 1-Vinyl-2-methylimidazol und Benzimidazol ausgewählt ist.

11. Verfahren gemäß einem der Ansprüche 1 bis 10, dadurch gekennzeichnet, daß einerseits die Mengen des N,N'-Bisimids bzw. der N,N'-Bisimide (a) und des Diacrylats bzw. der Diacrylate (b) derart ausgewählt sind, daß das Verhältnis r

$$\frac{\text{Zahl der Mole des Bisimds bzw. der Bisimide (a)}}{\text{Zahl der Mole des Diacrylats bzw. der Diacrylate (b)}}$$

im Bereich von 1,7/1 bis 20/1 liegt, und andererseits der Gehalt an Imidazolverbindung (c), ausgedrückt in Anzahl der Mole Verbindung (c) je 100 g Gemisch Bisimid(e) (a) + Diacrylat(e) (b) im Bereich von $0{,}15 \times 10^{-3}$ bis $6 \times 10^{-3}$ liegt.

12. Verwendung der gemäß einem der Ansprüche 1 bis 11 hergestellten Polymeren zur Herstellung von Formgegenständen, geschichteten Gegenständen und Artikeln mit Zellstruktur.